# EUROPEAN PATENT APPLICATION

(11) **EP 2 757 462 A2**
(43) Date of publication of application: **23.07.2014**
(21) Application number: 13197773.8
(22) Date of filing: 17.12.2013
(51) Int. Cl.: G06F 3/06

(54) **Hybrid hard disk drive having a flash storage processor**

(30) Priority: 18.01.2013 US 201313744519
(71) Applicant: LSI Corporation, Milpitas, CA 95035 (US)
(72) Inventor: Fisher, Daniel S., Dublin, CA 94588 (US); Zaharris, Daniel, Longmont, CA 80503 (US)
(74) Representative: Somervell, Thomas Richard

(57) **Abstract**

An apparatus is described that is configured to control operations in a hybrid hard disk drive. In an implementation, the apparatus includes a hybrid flash storage processor connected to the host interface that is configured to communicatively couple a flash storage component and to a hard disk integrated circuit chip. The integrated circuit chip includes a read/write channel device configured to communicatively couple to a hard disk drive assembly and a hard disk drive controller operatively coupled to the read/write channel device. The hard disk drive controller is configured to operate the read/write channel device to store and to retrieve data on the hard disk drive assembly. The flash storage processor is configured to furnish a command to the integrated circuit chip when the command represents an instruction for accessing the hard disk drive assembly and is configured to access the flash storage component when the command represents an instruction for accessing the flash storage component.

## Description

### FIELD OF THE INVENTION

The present invention is directed to a hard disk drive system, and more particularly to a hybrid hard disk drive having a flash storage processor.

### BACKGROUND

Computing devices, such as personal computers, servers, mobile computing devices, networking devices, and so forth, include computer storage components for retaining and providing digital data. Computer storage components range from volatile storage components, which do not retain data when the device is powered down, to non-volatile storage components, which retain data when the device is powered down. Volatile storage components typically include random-access memory devices, such as dynamic random-access memory (DRAM), which are utilized due to the devices' low-latency characteristics. Non-volatile storage components typically include hard disk drives and flash memory devices. These types of storage components are utilized for long-term persistent storage.

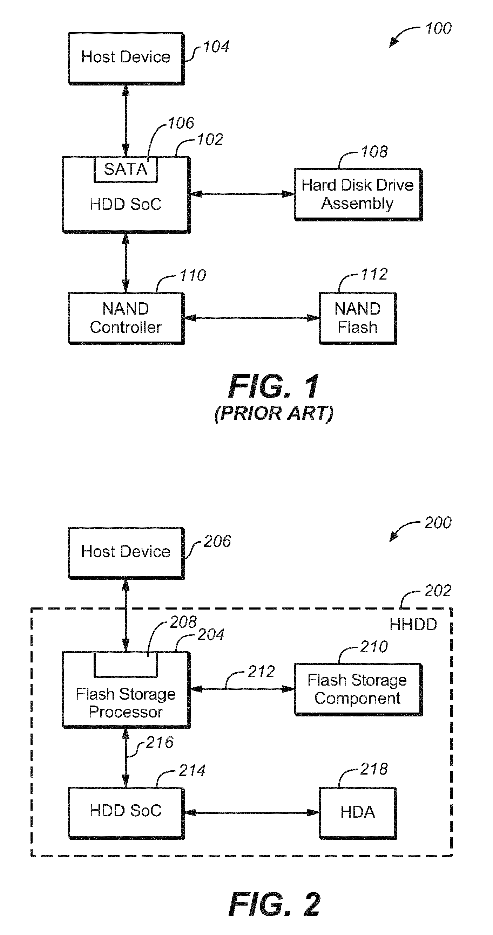

FIG. 1 illustrates a hybrid hard disk drive (HHDD) system 100 in the prior art. As shown, the system 100 includes a hard disk drive system on a chip (hard disk drive system on a chip) 102 that is communicatively coupled to a host device 104 via a serial ATA (SATA) communication interface 106. The hard disk drive system on a chip 102 is also communicatively coupled to a hard disk drive assembly (HDA) 108 and to a NAND flash memory controller 110. The NAND flash memory controller 110 is communicatively coupled to a NAND flash storage component 112 and is configured to control operation of the NAND flash component 112. The NAND flash storage component 112 comprises a plurality of NAND flash memory cells arranged within an array configuration. In this implementation, the hard disk drive system on a chip 102 typically contains flash management hardware and firmware, as well as algorithms stored therein, to determine the data that is stored in the flash storage component 112. The hard disk drive system on a chip 102 is required to share resources (e.g., buffer memory, processors, data path, etc.) between the rotating magnetic storage operations and the flash storage operations. Additionally, hybrid enabled hard disk drive system on a chip devices, such as the hard disk drive system on a chip 102 shown in FIG. 1, have to support two different adjacent storage mediums. Thus, modifications to the hard disk drive system on a chip may be required if changes are needed to support different (magnetic) heads and media or if changes are made to flash storage component. The hard disk drive system 100 shown in FIG. 1 may require two independent hard disk drive system on a chips to service each storage medium.

### SUMMARY

An apparatus is described that is configured to control operations in a hybrid hard disk drive. In one or more implementations, the apparatus includes a flash storage processor that is configured to communicatively couple a flash storage component and to an integrated circuit chip. The integrated circuit chip (e.g., a hard disk drive system on a chip) includes a read/write channel device configured to communicatively couple to a hard disk drive assembly and a hard disk drive controller operatively coupled to the read/write channel device. The hard disk drive controller is configured to operate the read/write channel device to store and to retrieve data on the hard disk drive assembly. The flash storage processor is configured to furnish a command to the integrated circuit chip when the command represents an instruction for accessing the hard disk drive assembly and is configured to access the flash storage component when the command represents an instruction for accessing the flash storage component.

This Summary is provided to introduce a selection of concepts in a simplified form that are further described below in the Written Description. This Summary is not intended to identify key features or essential features of the claimed subject matter, nor is it intended to be used as an aid in determining the scope of the claimed subject matter.

### BRIEF DESCRIPTION OF THE FIGURES

The Written Description is described with reference to the accompanying figures. The use of the same reference numbers in different instances in the description and the figures may indicate similar or identical items.
FIG. 1 is a block diagram of a hybrid hard disk drive system in the prior art.
FIG. 2 is a block diagram of a hybrid hard disk drive system in accordance with an example implementation of the present disclosure.
FIG. 3 is a block diagram illustrating a portion of an example hard disk drive system on a chip component, an example flash storage processor, and an example flash storage component in accordance with an example implementation of the present disclosure.
FIG. 4 is a method diagram for controlling operation of a hybrid disk drive system, such as the hybrid disk drive system illustrated in FIG. 2, in accordance with the present disclosure.

### WRITTEN DESCRIPTION

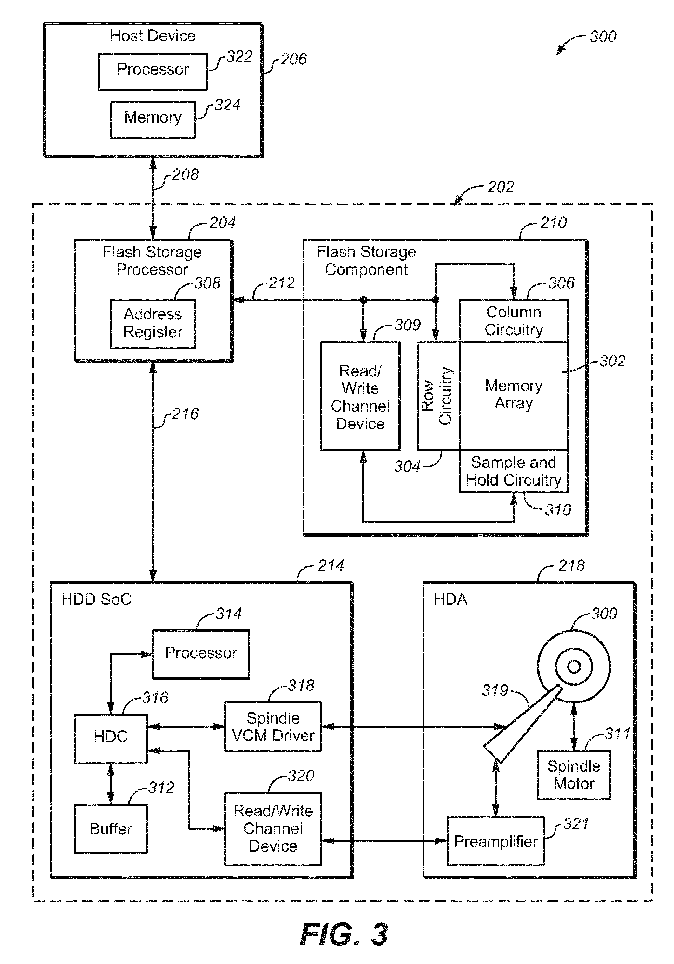

FIG. 2 illustrates a system 200 that includes a hybrid hard disk drive (HHDD) 202 in accordance with the present disclosure. The hybrid hard disk drive 202 can provide for improved read performance over the system 100 as described in greater detail herein. As shown, the hybrid hard disk drive 202 includes a flash storage processor 204 (e.g., a hybrid flash storage processor) that is communicatively connected to a host device 206 via a communication interface 208. In an embodiment, the communication interface 208 is a serial ATA (SATA) communication interface. In another embodiment, the communication interface 208 is a peripheral component interconnect express (PCIe) communication interface. As shown, the flash storage processor 204 is also communicatively connected to a flash storage component 210 via a communication interface 212. In an embodiment, the communication interface 212 utilizes an open NAND flash interface (ONFI) protocol to communicate between the storage processor 204 and the flash storage component 210. The flash storage processor 204 is also communicatively connected to a hard disk drive system on chip (HDD SoC) 214 via a communication interface 216. The hard disk drive system on a chip 214 comprises an integrated circuit chip having one or more integrated circuit devices that provide hard disk drive control functionality as described in greater detail herein and illustrated in FIG. 3. In an embodiment, the communication interface 216 comprises a SATA communication interface. It is contemplated that the system 200 can utilize many hard disk drive system on a chip embodiments with modifications of the firmware and no hardware modifications. Thus, hard disk drive system on a chips can be reused for hybrid or non-hybrid drives to provide volume and cost benefits. Additionally, non-hybrid drives may not be burdened with a hybrid enabled hard disk drive system on a chip, which reduces cost.

As described in greater detail herein, the flash storage processor 204 is configured to receive one or more commands from the host device 206 and determine whether the command represents a command for accessing the flash storage component 210 or the command is requesting to store data to the rotating magnetic media. When the flash storage processor 204 determines the command is not directed to the flash storage component 210 (e.g., the command does not cause the flash storage processor 204 to access the flash storage component 210), the flash storage processor 204 is configured to furnish the command to the hard disk drive system on a chip 214 for further processing. In another embodiment, the flash storage processor 204 is configured to manage power within the system 200. For example, the flash storage processor 204 is configured to cause the hard disk drive system on a chip 214 to transition from a powered down state (e.g., the hard disk drive system on a chip 214 is powered down or in a power conservation state) to a powered on state when the processor 204 determines the command is directed to the hard disk drive system on a chip 214. In some embodiments of the disclosure, the hard disk drive system on a chip 214 is in a powered down state to conserve power within the system 200 when the hard disk drive system on a chip 214 has not been accessed for a predetermined amount of time (e.g., powered down due to the host device 206 not issuing any commands directed to the hard disk drive system on a chip 214). In an embodiment of the present disclosure, the flash storage processor 204 is utilized to function as a bridge to support various communication interfaces, such as peripheral component interconnect express communication interfaces. Thus, the hard disk drive system on a chip 214 requires no additional modifications to allow for the communication between a peripheral component interconnect express host for a peripheral component interconnect express hybrid hard disk drive system.

The flash storage processor 204 is configured to access the flash storage component 210 when the processor 204 determines the issued command represents a request to access the storage component 210 and perform an operation as defined by the command. For example, the flash storage processor 204 is configured to access and retrieve data stored within the flash storage component 210 when the issued command is a read command (e.g., a read operation). In another example, the flash storage processor 204 is configured to access and write data to the flash storage component 210 when the issued command is a write command (e.g., a write operation).

FIG. 3 illustrates a system 300 that includes a specific embodiment of the hybrid hard disk drive 202. As shown in FIG. 3, the flash storage component 210 comprises an array 302 of memory cells, such as non-volatile memory cells, arranged in rows and columns (e.g., each memory cell comprises a NAND device at the intersection of the bitlines and wordlines, as described below). Although the various embodiments are described primarily with reference to NAND flash memory arrays, the various implementations are not limited to a specific architecture of the memory array 302.

As shown in FIG. 3, row decode circuitry 304 and column decode circuitry 306 are provided to decode address signals provided to the memory array. Address signals are received and decoded to access the memory array 302 (e.g., access one or more blocks of memory cells). The flash storage processor 204 is configured to manage input of commands, addresses, and data to the flash storage component 210, as well as output of data from the flash storage component 210. For example, the flash storage processor 204 includes an address register 308 that is communicatively connected to the row decode circuitry 304 and the column decode circuitry 306 to latch the address signals prior to decoding. The flash storage processor 204 is operatively coupled (e.g., in communication with) a read/write channel device 309 that provides for analog-to-digital conversion of data signals received from the flash storage component 204.

The read/write channel device 309 is communicatively connected to sample and hold circuitry 310. The sample and hold circuitry 310 is configured to latch data (e.g., latch incoming or outgoing data) received from the read/write channel device 309 as analog voltage levels. In some embodiments of the disclosure, the sample and hold circuitry 310 includes capacitors, or other analog storage devices, for sampling either an incoming voltage signal representing data to be written to a memory cell or an outgoing voltage signal indicative of the threshold voltage sensed from a memory cell. The sample and hold circuitry 310 may further provide for amplification and/or buffering of the sampled voltage to provide a stronger data signal to an external device.

During a write operation, target memory cells of the memory array 302 are programmed until voltages indicative of the respective memory cell's Vₜ levels match the levels held in the sample and hold circuitry 310. In an embodiment, the write operation can be accomplished using differential sensing devices to compare the held voltage level to a threshold voltage of the target memory cell. For example, programming pulses could be applied to a target memory cell to increase the memory cell's threshold voltage until reaching or exceeding the desired value. During a read operation, the Vₜ levels of the target memory cells are passed to the sample and hold circuitry 310 for transfer to an processor either directly as analog signals or as digitized representations of the analog signals (depending upon whether analog-to-digital/digital-to-analog [ADC/DAC] functionality is provided external to, or within, the memory array).

Threshold voltages of cells may be determined in a variety of manners. For example, a word line voltage is sampled at the point when the target memory cell is activated. In another example, a boosted voltage is applied to a first source/drain side of the target memory cell, and the threshold voltage is taken as a difference between the target memory cell's control gate voltage and the voltage at the target memory cell's other source/drain side. By connecting the voltage to a capacitor, charge is shared with the capacitor to store the sampled voltage. It is understood that the sampled voltage need not be equal to the threshold voltage, but indicative of that voltage. In the case of applying a boosted voltage to a first source/drain side of the memory cell and a known voltage to the memory cell's control gate, the voltage developed at the second source/drain side of the memory cell may be taken as the data signal as the developed voltage is indicative of the threshold voltage of the memory cell.

As shown in FIGS. 2 and 3, the hard disk drive system on a chip 214 is communicatively connected to a hard drive assembly (HDA) 218. The hard drive assembly 218 includes one or more hard drive platters 309 that are coated with magnetic layers (see FIG. 3). The hard drive platters 309 are configured to store data in the form of magnetic data. More specifically, the magnetic layers store magnetic transitions that represent binary 1's and 0's. As shown in FIG. 3, the hard drive assembly 218 further includes a spindle motor 311 that is configured to rotate the hard drive platter 309 (e.g., during read and write operations). As described above, the commands directed to the hard disk drive system on a chip 214 are furnished to the hard disk drive system on a chip 214 by the flash storage processor 204 (e.g., the commands directed to the hard disk drive system on a chip 214 pass through the flash storage processor 204 to the hard disk drive system on a chip 214). Thus, the flash storage processor 204 functions as a bridge between the communication interface 208 and the communication interface 216 when the command is directed to the hard disk drive system on a chip 214 portion of the system 200 (i.e., a command issued by the host device 206).

The hard disk drive system on a chip 214 includes a buffer 312 that stores data that is associated with the control of the hard disk drive system on a chip system 214 and/or buffers data to allow data to be collected and transmitted as larger data blocks to improve efficiency. The buffer 312 employs dynamic random access memory (DRAM) or other types of low latency memory. In a specific embodiment, the buffer 312 employs double data rate (DDR) synchronous DRAM optimized for rotating magnetic applications. The hard disk drive system on a chip 214 further includes a processor 314 that performs processing that is related to the operation of the hard disk drive system on a chip 214, such as spindle control processing.

The hard disk drive system on a chip 214 also includes a hard disk controller (HDC) 316 that communicates with the storage processor 204. The hard disk controller 316 also communicates with the processor 314, a spindle/voice coil motor (VCM) driver 318, and/or the read/write channel device 320. Thus, the processor 314 is communicatively coupled to the hard disk controller 316 and is configured to receive the commands from the hard disk controller 316. In some embodiments, the hard disk controller 316 is configured to operate the read/write channel device 320 to store and to retrieve data on the hard drive assembly 218. Based upon the received commands (e.g., the commands received from the host device 206), the processor 314 is configured to cause the hard disk controller 316 to access the hard drive assembly 218. The read/write channel device 320 provides for analog-to-digital conversion of data signals received from/transmitted to the hard drive assembly 218. The spindle/VCM driver 318 is configured to control the spindle motor 311, which rotates the platter 309 to the desired speed. The spindle/VCM driver 318 is also configured to generate control signals that position a read/write arm 319 in relation to the platter 309. Thus, the processor 314 can cause the hard disk controller 316 to instruct the spindle/VCM driver 318 to issue control signals to the read/write arm 319. Once positioned, data can be either read or written to the hard drive platter 309 via the read/write channel device 320. As shown, a preamplifier 321 is communicatively coupled between the disk platter 309 and the read/write channel device 320. During a read operation, the preamplifier 321 is configured to amplify minute analog signals accessed from the disk platter 309, which the read/write channel device 320 decodes and digitizes the received analog signal to recreate the information originally written to the disk platter 309. The preamplifier 321 is configured to amplify the data furnished to the disk platter 309 from the read/write channel device 320 during a write operation.

As shown in FIG. 3, the host device 206 includes a processor 322 and memory 324. As described above, the host device 206 is configured to furnish one or more commands to the hybrid hard disk drive 202. For example, the processor 322 of the host device 206 is configured to cause the issuance of write commands (i.e., write operations, write instructions), as well as cause the data to be stored during the write operation, to the hybrid hard disk drive 202. In another example, the processor 322 of the host device 206 is configured to cause the issuance of read commands (i.e., read operations, read instructions) to the hybrid hard disk drive 202. Based upon the intended destination of the issued command, the flash storage processor 204 is configured to access the flash storage component 210 or to furnish the issued command to the hard disk drive system on a chip 214 (e.g., furnishes the issued command to the hard disk controller 316 so that the hard disk controller 316 can access the hard drive assembly 218 per the issued command). Additionally, the flash storage processor 204 is configured to manage the power state of the hard disk drive system on a chip 214 portion of the system 200. For example, the processor 204 is configured to cause the hard disk drive system on a chip 214 (as well as the hard drive assembly 218) to transition from a powered on state to a powered down state when the hard disk drive system on a chip 214 has not been accessed after a predetermined amount of time. In another example, the processor 204 is configured to cause the hard disk drive system on a chip 214 (as well as the hard drive assembly 218) to transition from a powered down state (e.g., if the hard disk drive system on a chip 214 and/or the hard drive assembly 218 are in the powered down state) to the a powered on state when the processor 204 determines the command is directed to the hard disk drive system on a chip 214.

It is contemplated that the rotating magnetic memory portion (e.g., the hard disk drive system on a chip 214) and the flash memory portion (e.g., the flash storage component 210) of the hybrid hard disk drive 202 are independent of each other. Thus, the hybrid hard disk drive 202 is configured to conserve power when the hard disk drive system on a chip 214 is not being accessed by the host device 206. Additionally, the read and the write commands to the flash memory portion and the rotating magnetic memory portion can be concurrent operations (with no shared hardware) due to the independent configuration of the present disclosure. It is contemplated that the read performance of the present disclosure can be improved over other hybrid hard disk drive configurations, such as the hard disk drive configuration as shown in FIG. 1 due to the flash memory component 210 having a lower read/write latency as compared to the hard drive assembly 218. In an embodiment of the present disclosure, the host interface protocols utilized by the system 200 support command queuing to allow the processor 204 to furnish the rotating media requests (e.g., commands) to the hard disk drive system on a chip 214 while servicing (e.g., processing) flash media requests in parallel. In another embodiment of the present disclosure, the system 200 supports various power management modes. For example, the system 200 is configured to support serial ATA device sleep (DevSleep) power management mode. More specifically, the flash storage processor 204 is configured to control power (e.g., causing one or more storage mediums to enter a powered down state) within the system 200 based upon a power down command (e.g., DEVSLP signal) issued by the host device 206. In another example of the present disclosure, the system 200 is configured to support peripheral component interconnect express power management modes.

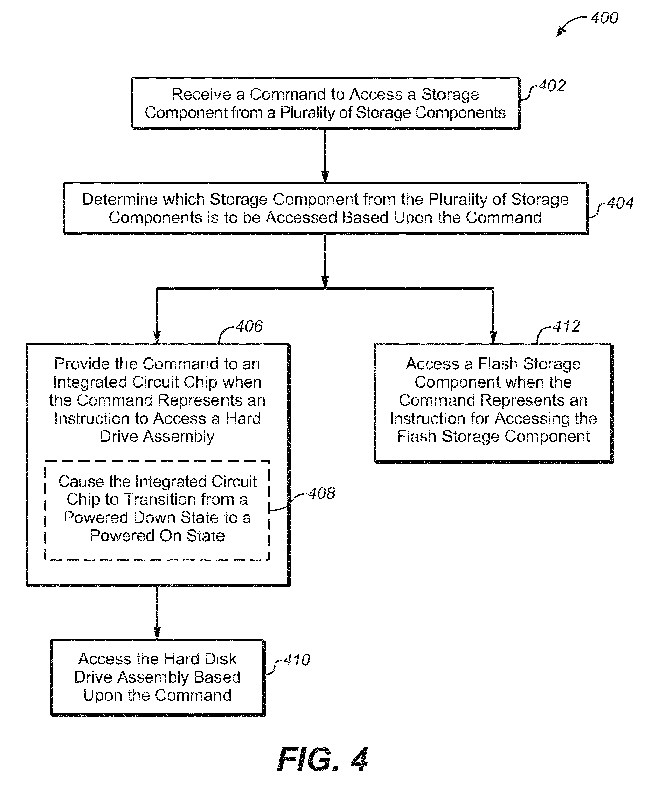

FIG. 4 depicts a method 400 in an example embodiment for controlling operation of a hybrid hard disk drive. As shown, a command to access a storage component (e.g., a flash storage component, a hard disk drive assembly) from a plurality of storage components is received (Block 402). As described in greater detail above, a host device 206 is configured to issue commands to the hybrid hard disk drive 202, which are received by the flash storage processor 204 (e.g., the hybrid flash storage processor). For example, the host device 206 issues a read command or a write command to the system 200. The command represents one or more instructions directed to the flash storage processor 204 or directed to the hard disk drive system on a chip 214 to cause the processor 204 or the hard disk drive system on a chip 214 (e.g., the hard disk controller 316) to access the respective storage component (e.g., the flash storage component 210 or the hard drive assembly 218). For example, the host device 206 issues a read command to access data stored in the memory array 302 or to access data stored in the hard drive assembly 218. In this example, the read command includes data specifying the storage component to access data from and the location of the stored data to access. In another example, the host device 206 is configured to issue a write command to store data into the memory array 302 or to store data in the hard drive assembly 218. In this example, the write command includes data specifying the storage component to write the data to, the location within the respective storage component to store (e.g., write) the data to, and the data to be stored (e.g., written) within the specified storage component. Additionally, as described above, the host device 206 is configured to issue at least substantially concurrent commands with at least one command directed to the flash storage component 210 and at least one other command directed to Hard disk drive system on a chip 214.

A determination is made of which storage component is to be accessed based upon the command (Block 404). For example, the flash storage processor 204 receives the command issued by the host device 206 via the communication interface 208. The flash storage processor 204 is configured to determine the storage component to be accessed based upon the issued command. As described above, the command can represent a read or write operation for accessing the flash storage component 210 or the command can represent a read or write operation for accessing the hard drive assembly 218.

As shown in FIG. 4, the command is provided to a hard disk drive system on a chip (e.g., an integrated circuit chip) when the command represents an instruction to access a hard drive assembly (Block 406). The flash storage processor 204 is configured to furnish the command to the hard disk drive system on a chip 214 when the flash storage processor 204 determines that the command is directed to the hard disk drive system on a chip 214. The hard disk controller 316 is configured to access the hard drive assembly 218 based upon the command received from the flash storage processor 204. In some implementations, as shown in FIG. 4, the flash storage processor causes the hard disk drive system on a chip to transition from a powered down state to a powered on state (Block 408). As described above in greater detail, the flash storage processor 204 causes (e.g., issues a command to transition from the powered down state to a powered on state) the hard disk drive system on a chip 214 to transition from a powered down state to a powered up state before furnishing the command to the hard disk drive system on a chip 214 due to the hard disk drive system on a chip 214 being powered down due to hard disk drive system on a chip 214 inactivity (e.g., no commands being issued to the hard disk drive system on a chip 214) for a predetermined amount of time. The hard disk drive assembly is accessed based upon the received command (Block 410). The hard disk controller 316 is configured to access the hard drive assembly 218 and cause an operation to be performed based upon the issued command. In some embodiments, the hard disk controller 316 is configured to cause data to be written and stored to the hard drive assembly 218 when the command represents a write operation. In another embodiment, the hard disk controller 316 is configured to cause data to be read from the hard drive assembly 218 when the command represents a read operation. The read data is then provided to the host device 206.

As shown in FIG. 4, the flash storage component is accessed when the command represents an instruction for accessing the flash storage component (Block 412). The flash storage processor 204 is configured to access the flash storage component 210 when the command represents a command to access the flash storage component 210. For example, the flash storage processor 204 is configured to cause data to be written and stored to flash storage component 210, such as a NAND memory array (i.e., memory array 302). In another example, the flash storage processor 204 is configured to cause data to be read from the flash storage component 210 when the command is a read operation. The read data is then provided to the host device 206.

Although the subject matter has been described in language specific to structural features and/or process operations, it is to be understood that the subject matter defined in the appended claims is not necessarily limited to the specific features or acts described above. Rather, the specific features and acts described above are disclosed as example forms of implementing the claims.

## Claims

1. An apparatus comprising:
a flash storage processor configured to communicatively couple to a flash storage component and to an integrated circuit chip, the integrated circuit chip including:
a read/write channel device configured to communicatively couple to a hard disk drive assembly;
a hard disk drive controller operatively coupled to the read/write channel device, the hard disk drive controller configured to operate the read/write channel device to store and to retrieve data on the hard disk drive assembly,
wherein the flash storage processor is configured to furnish a command to the integrated circuit chip when the command represents an instruction for accessing the hard disk drive assembly and configured to access the flash storage component when the command represents an instruction for accessing the flash storage component.

2. The apparatus as recited in claim 1, wherein the flash storage processor is configured to cause the integrated circuit chip to transition from a powered down state to a powered up state when the command represents an instruction for accessing the hard disk drive assembly.

3. The apparatus as recited in claim 1, wherein the flash storage processor is configured to cause at least one of the hard disk drive assembly or the flash storage component to enter a powered down state in response to a DEVSLP signal.

4. The apparatus as recited in claim 1, wherein the flash storage processor is configured to communicatively couple to a host device, the host device configured to issue the command to the flash storage processor.

5. The apparatus as recited in claim 4, wherein the host device is configured to issue at least substantially concurrent commands to the flash storage processor, wherein at least one of the at least substantially concurrent commands represents instructions for accessing the hard disk drive assembly and at least one other of the at least substantially concurrent commands represents instructions for accessing the flash storage component.

6. The apparatus as recited in claim 1, wherein the flash storage processor is configured to furnish rotating media commands to the integrated circuit chip and process the flash media commands in parallel.

7. A system comprising:
a host device configured to issue a plurality of commands; and
an apparatus according to any of the preceding claims,
wherein the command furnished by the flash storage processor is at least one command of the plurality of commands.

8. The system as recited in claim 7, wherein the at least one command of the plurality of commands represents at least one of a write instruction for storing data or a read instruction for reading data.

9. The system as recited in claim 7, wherein the commands are at least substantially concurrent commands, wherein at least one of the at least substantially concurrent commands represents instructions for accessing the hard disk drive assembly and at least one other of the at least substantially concurrent commands represents instructions for accessing the flash storage component.

10. The system as recited in claim 7, wherein the flash storage processor is communicatively coupled to the host device via at least one of a serial ATA communication interface or a peripheral component interconnect express communication interface.

11. A method comprising:
receiving a command, at a flash storage processor, to access at least one storage component of a plurality of storage components, the plurality of storage components including at least one flash storage component and at least one hard disk drive assembly;
determining which storage component of the plurality of storage components is to be accessed based upon the command;
providing the command to an integrated circuit chip when the command represents an instruction to access the at least one hard disk drive assembly, the integrated circuit chip including a read/write channel device communicatively coupled to the hard drive assembly and a hard disk drive controller operatively coupled to the read/write channel device, the hard disk drive controller configured to operate the read/write channel device to store and to retrieve data on the at least one hard disk drive assembly; and
accessing the at least one flash storage component when the command represents an instruction to access the at least one flash storage command.

12. The method as recited in claim 11, wherein receiving a command further comprises receiving at least substantially concurrent commands from a host device, wherein at least one of the substantially concurrent commands represents an instruction to access the at least one flash storage component and at least one other of the substantially concurrent commands represents an instruction to access the at least one hard drive assembly.

13. The method as recited in claim 11, further comprising causing the integrated circuit chip to transition from a powered down state to a powered on state.

14. The method as recited in claim 11, wherein the command represents at least one of a write operation to store data or to a read operation for reading data.

15. The method as recited in claim 11, wherein receiving a command further comprises receiving a command, at a flash storage processor, to access at least one storage component of a plurality of storage components, the plurality of storage components including at least one flash storage component and at least one hard disk drive assembly, the command issued from a host device, the host device communicatively coupled to the flash storage processor.
